# EUROPÄISCHE PATENTANMELDUNG

(11) **EP 1 025 755 A1**
(43) Veröffentlichungstag der Anmeldung: **09.08.2000**
(21) Anmeldenummer: 00102646.7
(22) Anmeldetag: 08.02.2000
(51) Int. Cl.: A01M 25/00, A01M 1/20

(54) **Wiederbefüllbare Köderdose**

(30) Priorität: 08.02.1999 DE 19905062
(71) Anmelder: Nowak, Werner, 44623 Herne (DE)
(72) Erfinder: Nowak, Werner, 44623 Herne (DE)
(74) Vertreter: Bockhorni, Josef, Dipl.-Ing.

(57) **Zusammenfassung**

Wiederbefüllbare Köderdose aus einem zweiteiligen Behälter mit Oberteil und Unterteil, die über Verbindungselemente, vorzugsweise Rastelemente, miteinander verbunden sind, wobei die Köderdose mindestens eine Schädlingseintrittsöffnung und mindestens eine Köderaufnahmevorrichtung umfaßt, die die wiederholte Aufgabe und Entfernung eines Köders erlaubt und die Köderdose weiterhin mindestens eine sich von Ober- zur Unterseite der Köderdose erstreckende Schutz- und Stabilisierungsvorrichtung umfaßt, die gleichzeitig der Köderdose eine erhöhte Stabilität verleiht und den Köder vor direktem Zutritt von Schmutz und Verunreinigungen sowie dem Zugriff von außen durch die Schädlingseintrittsöffnung schützt, indem die Schutz- und Stabilisierungsvorrichtung so angeordnet ist, daß keine gerade Verbindung zwischen Schädlingseintrittsöffnung und Köderaufnahmevorrichtung möglich ist.

## Beschreibung

Der Gegenstand der vorliegenden Erfindung betrifft eine wiederbefüllbare Köderdose nach dem Oberbegriff des Patentanspruches 1.

Zur Schädlingsbekämpfung werden eine ganze Reihe von Methoden eingesetzt. Die zunächst einfachste Möglichkeit besteht darin, einen Köder in Form eines Feststoffes oder eines Gels direkt in dem von Schädlingen befallenen Bereichen auszulegen, so daß die Schädlinge durch den Köder angelockt werden und anschließend durch den in dem Köder enthaltenen Wirkstoff getötet werden. Feste Köder können dabei einfach ausgelegt oder verstreut werden, während flüssige oder pastöse Köder meistens mit einer Dosierpistole oder Spritze an entsprechenden Stellen aufgebracht werden. Der Nachteil dieser Methode besteht jedoch darin, daß nicht nur die Schädlinge mit dem Köder in Berührung gelangen können, sondern auch andere Tiere und Menschen. Da die Köder meist mit Giften versehen sind, ist dies dann besonders unerwünscht, wenn beispielsweise die Gefahr besteht, daß Kleinkinder mit dem Gift in Berührung kommen. Andererseits besteht ein weiterer Nachteil darin, daß der Köder nicht gegen Umwelteinflüsse geschützt ist, so daß der Köder sehr schnell seine Wirkung verlieren kann. Beispielsweise ist eine derartige einfache Auslegung eines Köders im Außenbereich oft nicht möglich, da beispielsweise durch Regen oder Witterungseinflüsse die Wirkung des Köders sehr schnell nachläßt. Ferner ist es nachteilig, daß nach einiger Zeit, wenn der Wirkstoff des Köders seine Wirkung verliert, der verbliebene Rest des Köders wieder entfernt werden muß.

Um den beschriebenen Sicherheitsproblemen und sonstigen Nachteilen abzuhelfen und die Wirkung des Köders über eine längere Zeit sicherzustellen, ist es bekannt, Köderdosen zu verwenden, in denen der Köder eingebracht ist, so daß der Köder einerseits nicht direkt zugänglich ist und andererseits gegenüber äußeren Einflüssen geschützt ist. Bei den bekannten Köderdosen werden einerseits Einmal-Köderdosen benutzt, die nach dem Gebrauch und dem Nachlassen der Wirkung des Köders zusammen mit dem Köder entsorgt werden. Zum anderen sind auch wiederverwertbare Köderdosen bekannt, die nach einem Nachlassen der Köderwirkung wiederbefüllt werden können. Ein Beispiel für eine derartige Köderdose ist in dem deutschen Gebrauchsmuster DE 295 08 139 U1 gegeben. Diese bekannten Köderdosen weisen jedoch den Nachteil auf, daß sie den Köder nicht ausreichend vor dem Zugriff oder der Beeinträchtigung von Außen schützen. Darüber hinaus ist bei den bekannten Köderdosen ein komplizierter Aufbau notwendig, um Schutz des Köders und Zugang für die Schädlinge miteinander zu vereinbaren, wobei gleichzeitig eine ausreichende Stabilität der Köderdose gegen mechanische Belastungen von außen gegeben sein muß. Der dazu erforderliche komplizierte Aufbau führt oft zu erheblichen Schwierigkeiten bei der Herstellung, was zu einem entsprechenden Kosten- und Arbeitsaufwand führt. Außerdem ist es bei den bekannten Köderdosen aufwendig diese wieder zu befüllen.

Es ist deshalb Aufgabe der vorliegenden Erfindung, eine wiederbefüllbare Köderdose bereitzustellen, die sich dadurch auszeichnet, daß sie extrem leicht und schnell wiederbefüllbar ist, wobei gleichzeitig eine ausreichende Stabilität der Köderdose gewährleistet ist und darüber hinaus der Köder vor unbefugtem Zugriff von außen oder vor Beeinträchtigungen durch Verschmutzung und Verunreinigungen geschützt ist. Darüber hinaus ist es die Aufgabe der vorliegenden Erfindung, daß die Köderdose einfach herstellbar und verwendbar ist und für vielfältige Aufgaben im Innen- und Außenbereich eingesetzt werden kann, ohne ein negatives Erscheinungsbild zu hinterlassen.

Die vorliegende Aufgabe wird durch eine Köderdose gemäß den Merkmalen des kennzeichnenden Teils des Patentanspruches 1 gelöst.

Die erfindungsgemäße Köderdose umfaßt ein Ober- und Unterteil, die über Verbindungselemente miteinander lösbar verbunden sind. Vorzugsweise bestehen die Verbindungselemente aus Rastelementen, wie beispielsweise Federelemente und die Federelemente hintergreifende Rasthaken. Damit ist es gewährleistet, daß die Köderdose in einfacher Weise immer wieder geöffnet und geschlossen werden kann.

Weiterhin umfaßt die wiederbefüllbare Köderdose nach der vorliegenden Erfindung mindestens eine Schädlingseintrittsöffnung, durch die die zu bekämpfenden Schädlinge in die Köderdose und zu dem darin aufbewahrten Köder gelangen können. Zur Aufnahme des Köders ist eine Köderaufnahmevorrichtung in der Köderdose vorgesehen, wodurch ein wiederholtes Einbringen und Entnehmen eines Köders ermöglicht wird.

Ferner umfaßt die Köderdose eine Schutz- und Stabilisierungsvorrichtung, die gleichzeitig zwei Funktionen erfüllt. Zum einen erhöht sie die Stabilität der Köderdose, in dem sie eine Abstützung der Ober- zur Unterseite der Köderdose und umgekehrt bewirkt. Dazu erstreckt sich die Schutz- und Stabilisierungsvorrichtung von der Ober- zur Unterseite der Köderdose. Zum anderen übernimmt die Schutz- und Stabilisierungsvorrichtung die Aufgabe, den Köder, der an der Köderaufnahmevorrichtung angeordnet ist, vor direkter Beeinträchtigung durch Schmutz und Verunreinigungen sowie dem Zugriff von außen durch die Schädlingseintrittsöffnungen zu schützen. Dazu wird die Schutz- und Stabilisierungsvorrichtung der erfindungsgemäßen Köderdose so angeordnet, daß sie sich zwischen der Köderaufnahmevorrichtung und der Schädlingseintrittsöffnung befindet und somit einen direkten, geraden Zugang von der Schädlingseintrittsöffnung zur Köderaufnahmevorrichtung verhindert.

Somit ist gewährleistet, daß die Schädlinge zu dem Köder gelangen können, ohne daß die Gefahr besteht, daß Kinder oder Haustiere in ungewollter Weise mit dem Köder in Berührung gelangen. Gleichzeitig wird dafür gesorgt, daß die Wirkungsdauer des Köders nicht durch äußere Beeinträchtigungen verkürzt wird. Da die Schutz- und Stabilisierungsvorrichtung gleichzeitig die Stabilität der Köderdose gewährleistet, wird erreicht, daß einerseits auch keine Gefahr durch Beschädigung der Köderdose für die Umwelt entsteht, und andererseits, daß die Köderdose trotz der verbesserten Eigenschaften einfach herzustellen ist, da kein komplizierter Aufbau notwendig ist.

Zur weiteren Vereinfachung der Wiederbefüllung der Köderdose mit dem Köder ist vorteilhafterweise an der Köderdose mindestens eine Nachfüllöffnung vorgesehen, die das direkte Aufbringen des Köders auf ein oder mehrere Köderaufnahmevorrichtungen ermöglicht, ohne vorher die Köderdose vollständig zu öffnen und in ihre beiden Teile zu zerlegen.

Vorzugsweise ist die Nachfüllöffnung so ausgelegt, daß es möglich ist, eine Kanüle oder Spritzenspitze oder dergleichen durch sie hindurchzustecken und über diese Kanüle oder ähnliches ein flüssiges oder pastöses Präparat auf der Köderaufnahmevorrichtung aufzubringen. Somit wird erreicht, daß ohne großen Aufwand nach dem Nachlassen der Wirkung des Köders nach einiger Zeit eine einfache Wiederbefüllung der Köderdose mit dem Wirkstoff ermöglicht wird. Selbstverständlich sind auch viele andere Möglichkeiten für eine Nachfüllöffnung denkbar, so z.B. eine Nachfüllöffnung, die auch das Nachfüllen eines festen Köders ermöglicht.

Allerdings ist es dann, falls eine etwas größere Nachfüllöffnung vorgesehen werden sollte, sinnvoll, eine Abdeckaufnahmevorrichtung vorzusehen, die es ermöglicht, eine Abdeckeinrichtung zum sicheren Abdecken der Nachfülleinrichtung aufzubringen. Dies kann auch in dem Fall sinnvoll sein, wenn zwar nur eine kleine Öffnung für eine Kanüle vorgesehen ist, aber befürchtet werden muß, daß durch diese kleine Öffnung Verunreinigungen oder Schmutz zu dem Köder gelangen können.

Eine sehr einfache Abdeckaufnahmevorrichtung mit dazu gehöriger Abdeckeinrichtung kann z.B. dadurch realisiert werden, daß an der Köderdosenaußenseite im Bereich der Nachfüllöffnung eine kleine Vertiefung vorgesehen ist, die beispielsweise einen Aufkleber aufnehmen kann. Der Aufkleber dient dabei als Abdeckeinrichtung zum sicheren Verschließen der Nachfülleinrichtung. Gleichzeitig bietet eine derartige Lösung den Vorteil, daß die Abdeckeinrichtung gleichzeitig als Kennzeichnungsmittel verwendet werden kann, auf dem Warn- und Informationshinweise bezüglich des verwendeten Köders angegeben sind.

Die in der Köderdose vorgesehene Köderaufnahmevorrichtung kann durch einen auswechselbaren Träger für flüssige, feste oder pastöse Köder oder eine Klemmnvorrichtung für feste Köder gebildet werden. Es ist aber auch denkbar, daß eine Kombination aus auswechselbarem Träger und Klemmvorrichtung verwendet wird. Der auswechselbare Träger weist den Vorteil auf, daß der Köderstoff nach der Verwendung in einfacher Weise aus der Köderdose entfernt werden kann, ohne daß Rückstände in der Dose verbleiben. Somit kann eine aufwendige Reinigung der Köderdose vor einer erneuten Benutzung vermieden werden. Als Träger kommen verschiedenste Materialien und Formen in Betracht, wie z.B. Folien aus Kunststoff, Plättchen aus Glas oder dergleichen. Ein besonders einfacher Träger kann z.B. durch einen Papierstreifen gebildet werden, der vorzugsweise selbstklebend oder über ein Klebemittel angebracht wird.

Vorteilhafterweise umfaßt die Köderaufnahmevorrichtung desweiteren Kennzeichnungsmittel, die dazu dienen, an dem Ort, an dem der Köder angebracht wird, durch Warn- und Informationshinweise über den aufgebrachten Köder und dessen Wirkung und Verwendungszweck zu informieren.

Besonders vorteilhaft ist es deshalb, die Köderaufnahmevorrichtung und das Kennzeichnungsmittel miteinander zu kombinieren und einen abziehbaren Aufkleber zu verwenden, der gleichzeitig als Köderaufnahmevorrichtung und als Kennzeichnungsmittel dient. Dies hat den Vorteil, daß nur mit einem Element die Informations- und Trägerfunktion erzielt wird. Dies ist besonders auch deshalb vorteilhaft, weil nach der Benutzung des Köders der Köder zusammen mit dem Aufkleber vollständig und in einfacher Weise aus der Köderdose entfernt werden kann, so daß die Köderdose nunmehr für eine vollständig anderen Köder verwendet werden kann.

Die erfindungsgemäße Schutz- und Stabilisierungsvorrichtung der Köderdose kann vorzugsweise von einer Hülse gebildet werden, die sich von der Ober- zur Unterseite der Köderdose bzw. umgekehrt erstreckt. Die Hülsen- oder Zylinderform der Schutz- und Stabilisierungsvorrichtung hat den Vorteil, daß sie einfach realisiert werden kann und gleichzeitig eine gute Stabilisierungswirkung besitzt. Die Stabilisierungswirkung kann dadurch gesteigert werden, daß die als Schutz- und Stabilisierungsvorrichtung verwendete Hülse doppelwandig ausgeführt ist, wobei zwei Hülsen koaxial zueinander angeordnet werden. Dabei können beide Hülsen entweder am Dosenober- bzw. Unterteil angeordnet sein oder eine Hülse am Oberteil und die andere am Dosenunterteil und umgekehrt. Die Dimensionierung der Hülse, d.h. der Durchmesser der (äußeren) Hülse muß dabei so gewählt werden, daß die Köderaufnahmevorrichtung nicht auf direktem, geraden Weg von der Schädlingseintrittsöffnung erreicht werden kann. Sind in der Köderdose mehrere Schädlingseintrittsöffnungen vorgesehen, so müssen selbstverständlich eventuell auch mehrere Schutz- und Stabilisierungsvorrichtungen vorgesehen werden, damit von keiner der Schädlingseintrittsöffnungen ein direkter, gerader Zugang zu der Köderaufnahmevorrichtung oder eventuell mehreren Köderaufnahmevorrichtungen möglich ist.

Vorteilhafterweise kann die Schutz- und Stabilisierungsvorrichtung gleichzeitig als Verbindungsvorrichtung für die beiden Dosenteile und/oder als Befestigungsvorrichtung für die Anbringung der Köderdose an einem Gebäude, einem Gegenstand oder dergleichen dienen.

Die Funktion als Verbindungsvorrichtung wird beispielsweise dadurch realisiert, daß die ineinander angeordneten Hülsen der Schutz- und Stabilisierungsvorrichtung mit Rastelementen versehen sind, die sich gegenseitig verhaken. Desweiteren ist vorstellbar, daß die Hülse bzw. die Hülsen, insbesondere die innere Hülse, als Schraubhülse ausgebildet sind. So können konzentrisch zu der oder den Hülsen der Schutz- und Stabilisierungsvorrichtung Öffnungen an der Ober- und Unterseite der Köderdose vorgesehen sein, so daß eine Schraube hindurchgesteckt werden kann, die mit Hilfe einer Mutter die beiden Dosenteile fest miteinander verbindet. Gleichzeitig ist es bei dieser Realisierungsform möglich, daß durch die Öffnungen eine Schraube hindurchgesteckt wird, die dann an einer Wand oder einem Gegenstand verschraubt wird und so die Dose an diesem befestigt.

Vorzugsweise weist die Köderdose eine rechteckige Grundform auf und die Köderaufnahmevorrichtung ist an einer Seite des Rechteckes angeordnet, während an der gegenüberliegenden Seite eine Schädlingseintrittsöffnung vorgesehen ist. Dazwischen wird dann die Schutz- und Stabilisierungsvorrichtung ausgebildet, die vorzugsweise mittig angeordnet wird. Dies stellt eine besonders einfach zu realisierende Form der erfindungsgemäßen Köderdose dar.

Die Köderdose wird üblicherweise aus Kunststoff, vorzugsweise Acrylbutadyenstyrol (ABS), oder aus einem metallischen Werkstoff, vorzugsweise Aluminium, hergestellt. Diese Materialien erlauben es, die Köderdose sowohl im Freien als auch im Inneren eines Gebäudes zu verwenden. Außerdem wird durch diese Werkstoffe erreicht, daß die Köderdose in einfacher Weise hergestellt werden kann. Ein weiterer Vorteil der Köderdose bei Verwendung dieser Materialien liegt darin, daß die Köderdose in ihrem Aussehen nicht sofort als ein Mittel zur Bekämpfung von Schädlingen erkannt wird, sondern eher in dem Bereich von Telefondosen oder Elektrodosen angesiedelt wird. Dies ist für mancherlei Anwendung durchaus von Bedeutung, wenn ein negatives Image, das häufig mit der Schädlingsbekämpfung verbunden wird, vermieden werden soll.

Vorteilhaft für die Verwendung der erfindungsgemäßen Köderdose ist es auch, wenn die Dose insgesamt oder auch nur Teile, z.B. Ober- und Unterteil, der Dose in unterschiedlichen Farben gekennzeichnet oder ausgeführt werden. Anhand dieser unterschiedlichen Farbkennzeichnung kann man sofort feststellen, zu welchem Einsatzzweck und mit welchem Köder die Dose verwendet wird.

Selbstverständlich kann die erfindungsgemäße Köderdose mit einer Vielzahl von verschiedenartigen Ködern verwendet werden, die üblicherweise aus verschiedenen Wirkstoffen, Giften, Futterbestandteilen, Anlockmitteln oder dergleichen zusammengesetzt sind.

Die besonderen Kennzeichen, Vorteile und Merkmale der Erfindung werden nachfolgend im Detail an einer bevorzugten Ausführungsform erläutert, die anhand der beigefügten Zeichnungen beschrieben wird. Dabei zeigt
- Fig. 1: eine Draufsicht auf die Innenseite des Unterteils der Köderdose,
- Fig. 2: eine Draufsicht auf die Innenseite des Oberteils der Köderdose, und
- Fig. 3: eine perspektivische Ansicht der aus einem Unter- und Oberteil zusammengesetzten Köderdose.

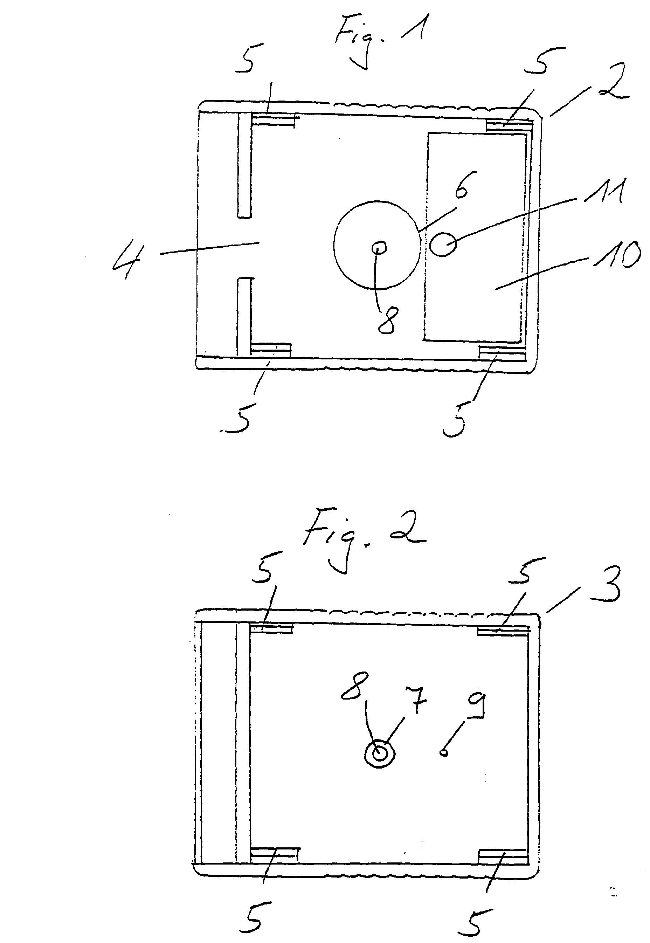

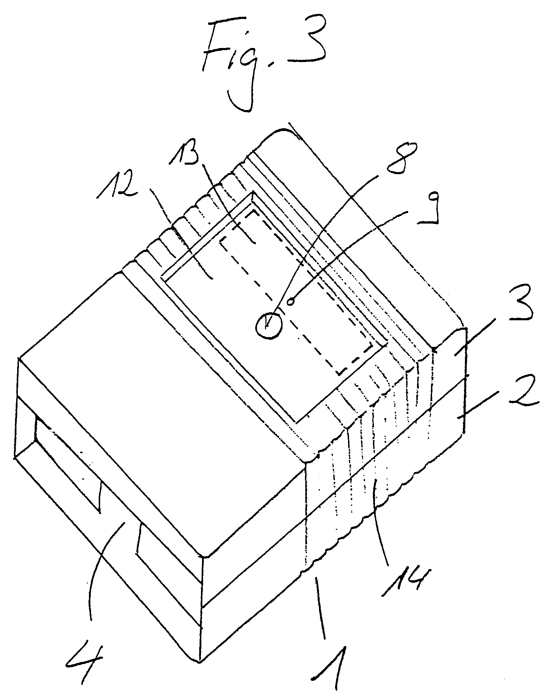

Wie in den Figuren 1 bis 3 zu sehen ist, handelt es sich bei dem bevorzugten Ausführungsbeispiel der erfindungsgemäßen Köderdose 1 um einen quaderförmigen Behältergrundkörper der ungefähr in der Mitte seiner Höhe in ein Unter- und Oberteil 2, 3 geteilt werden kann. Die Köderdose 1 weist an ihrem Unterteil 2 an einer der Seitenwände eine Schädlingseintrittsöffnung 4 auf, durch die die zu bekämpfenden Schädlinge in die Köderdose 1 gelangen können. Die beiden Teile, Ober- und Unterteil 2, 3, der Köderdose 1 können über Rastelemente und Rasthaken 5, die in den Eckbereichen von Ober- und Unterteil 2, 3 angeordnet sind, zusammengesteckt und miteinander verrastet werden.

Weiterhin weist die erfindungsgemäße Köderdose 1 eine Köderaufnahmevorrichtung 11 auf. Die Köderaufnahmevorrichtung 11 wird bei dieser bevorzugten Ausführungsform von einem abziehbaren Aufkleber gebildet, der die Köderaufnahmevorrichtung 11 und das Kennzeichnungsmittel 10 mit Warn- und Informationshinweisen über den aufgebrachten Köder in einem Element vereint. So dient der Aufkleber 10, 11 einerseits zur Aufnahme des vorzugsweise pastösen Ködergels in dem mit einem Kreis 11 graphisch gekennzeichneten Bereich und andererseits zum Aufdrucken von Informationen über das verwendete Ködergel sowie entsprechenden Warnhinweisen. Bei dem gezeigten Ausführungsbeispiel ist die in Form eines Aufklebers 10, 11 mit dem Kennzeichnungsmittel 10 kombinierte Köderaufnahmevorrichtung 11 entlang der der Schädlingseintrittsöffnung 4 gegenüberliegenden Seite der Köderdose 1 angeordnet.

Zwischen der Köderaufnahmevorrichtung 11 und der Schädlingseintrittsöffnung 4 ist die Schutz- und Stabilisierungsvorrichtung 6, 7 angeordnet. Die Schutz-und Stabilisierungsvorrichtung 6, 7 wird beim gezeigten Ausführungsbeispiel von zwei koaxial angeordneten Hülsen 6, 7 gebildet, die, wie in den Figuren 1 und 2 zu sehen ist, einerseits am Dosenunterteil 2 und andererseits am Dosenoberteil 3 angeordnet sind. Im dargestellten Ausführungsbeispiel ist die äußere Hülse 6 mit dem größeren Durchmesser am Dosenunterteil angeordnet, während die innere Hülse 7 mit dem kleineren Durchmesser am Gehäuseoberteil angeordnet ist. Die beiden Hülsen 6, 7 sind so senkrecht zur Bildebene ausgebildet, daß sie sich im zusammengebauten Zustand jeweils von der Dosenunter- zur Oberseite bzw. umgekehrt erstrecken. Die Schutz- und Stabilisierungsvorrichtung 6, 7 ist so dimensioniert und in der Köderdose 1 angeordnet, daß von der Schädlingseintrittsöffnung 4 keine gerade Verbindung zu dem abgelegten Köder hergestellt werden kann. Deshalb ist bei dem gezeigten Ausführungsbeispiel die Köderaufnahmevorrichtung 11 auf den mit einem Kreis gekennzeichneten Bereich beschränkt, während das Kennzeichnungsmittel 10, das zusammen mit der Köderaufnahmevorrichtung 11 in einem Aufkleber 10, 11 verwirklicht ist, einen größeren Bereich einnehmen kann.

Durch die Anordnung der Hülsen 6, 7 von der Dosenober- zur Unterseite bzw. umgekehrt erfüllen sie einerseits eine Stabilisierungsfunktion für die Ober- und Unterseite der Köderdose 1, und bewirken andererseits, daß Spalten vermieden werden, die möglicherweise einen direkten Zugang von der Schädlingseintrittsöffnung 4 zur Köderaufnahmevorrichtung 11 ermöglichen würden. Somit ist sichergestellt, daß der in die Köderaufnahmevorrichtung 11 abgelegte Köder vor Zugriff von Unbefugten und vor der Beeinträchtigung durch Schmutz und Verunreinigungen weitgehend geschützt ist. Durch die doppelwandige Ausführung der Schutz- und Stabilisierungsvorrichtung 6, 7 ergibt sich eine besonders gute Abstützung von Ober- und Unterseite der Köderdose 1 zueinander.

Darüber hinaus erfüllt die innere Hülse 7 noch den zusätzlichen Zweck als Führung für eine mit der Schutz- und Stabilisierungsvorrichtung verbundene Verbindungs- und/oder Befestigungsvorrichtung zu dienen. Sowohl in dem Dosenunterteil 2 (siehe Figur 1) als auch in dem Dosenoberteil 3 (siehe Figur 2) sind konzentrisch zu den Hülsen 6 und 7 Öffnungen 8 vorgesehen. Durch diese Öffnungen 8 kann eine Schraube (nicht gezeigt) hindurchgeführt werden, wobei die innere Hülse 7 als Führungshilfe dient, so daß mit dieser Schraube und einer entsprechenden Mutter oder Dübelanordnung eine Verbindung zwischen den beiden Köderdosenteilen 2, 3 hergestellt und gesichert werden kann, und darüber hinaus auch eine Befestigung der Köderdose 1 an einem Gegenstand oder einer Wand erreicht werden kann.

Wie in Figur 2 zu sehen ist, ist an dem Köderdosenoberteil 3 weiterhin eine Nachfüllöffnung 9 vorgesehen, die bei zusammengesetzter Köderdose 1 direkt über der Köderaufnahmevorrichtung 11 zu liegen kommt. Die Nachfüllöffnung 9 ist so dimensioniert, daß bei dem gezeigten Ausführungsbeispiel eine dünne Kanüle oder eine Spritze eingeführt werden kann. Somit ist es über die Nachfüllöffnung möglich, ein pastöses oder flüssiges Präparat auf die Köderaufnahmevorrichtung 11 aufzubringen, ohne die Köderdose 1 zu öffnen. Da die Nachfüllöffnung 9 entsprechend klein dimensioniert ist, bietet sie auch ausreichenden Schutz vor einem unbefugten Zugriff auf den Köder.

Um jegliche Zugriffsmöglichkeit oder Verschmutzungsgefahr des Köders auszuschließen, ist es weiterhin möglich, eine Abdeckaufnahmevorrichtung 12 vorzusehen, die es ermöglicht, eine Abdeckvorrichtung 13 zum Abdecken der Nachfüllöffnung 9 anzuordnen. In dem gezeigten Ausführungsbeispiel wird dies dadurch realisiert, daß an der Außenseite des Dosenoberteils 3 eine Vertiefung 12 eingebracht ist, die es erlaubt, einen Abdeckaufkleber 13 aufzubringen. Dieser Abdeckaufkleber verschließt in sicherer Weise die Nachfüllöffnung 9 und erlaubt darüber hinaus, daß auch hier Warn- und Informationshinweise über den ausgelegten Köder aufgebracht werden können. So ist beispielsweise denkbar, daß hier Informationen über die Art und die Wirkstoffe des Köders, eventuelle Sicherheitshinweise, Informationen über den Tag der Aufbringung und der erforderlichen Nachfüllung sowie über die damit beauftragte Firma aufgebracht werden können.

Die erfindungsgemäße Köderdose 1 nach dem gezeigten Ausführungsbeispiel kann nun in der folgenden Weise verwendet werden. Vor der erstmaligen Verwendung liegen die beiden Dosenteile 2, 3 in nicht zusammengebautem Zustand vor. Zunächst wird in das Dosenunterteil 2 das zu dem entsprechenden Köder gehörige Kennzeichnungsmittel 10 beispielsweise durch Einkleben eingebracht. Da das Kennzeichnungsmittel 10 bei dem gezeigten Ausführungsbeispiel gleichzeitig als Köderaufnahmevorrichtung dient, wird in dem als Köderaufnahmevorrichtung 11 gekennzeichneten Bereich der Köder aufgetragen. Vorzugsweise handelt es sich dabei um ein Ködergel. Es können jedoch auch andere Arten von Ködern verwendet werden, wie z.B. Feststoffköder, die beispielsweise auf der Köderaufnahmevorrichtung 11 aufgeklebt oder festgeklemmt werden können. Nach dem Einbringen des Kennzeichnungsmittels 10 und des Köders auf der Köderaufnahmevorrichtung 11 wird das Dosenoberteil 3 auf das Dosenunterteil 2 aufgesetzt und über die Rastelemente 5 miteinander verbunden. Dabei greift die innere Hülse 7, die an dem Dosenoberteil 3 angeordnet ist, in die äußere Hülse 6, die an dem Dosenunterteil 2 angeordnet ist, ein und bildet mit ihr zusammen die Schutz- und Stabilisierungsvorrichtung 6, 7, wobei sie einerseits eine gegenseitige Abstützung der Dosenunter- bzw. Oberseiten ermöglicht und andererseits den Köder vor dem direkten Zugriff von der Schädlingseintrittsöffnung 4 schützt.

Anschließend kann die Köderdose 1 zusätzlich durch eine Schraubverbindung gesichert werden, die in den entsprechenden Öffnungen 8 des Dosenunter- bzw. Oberteils 2, 3 angeordnet wird. Diese Schraubverbindung kann zusätzlich auch zur Befestigung der Köderdose 1 an einem Gegenstand oder an einer Wand genutzt werden.

Zusätzlich kann nun an der Abdeckaufnahmevorrichtung 12, die in Form einer Vertiefung gebildet ist, eine Abdeckeinrichtung 13 in Form eines Aufklebers angebracht werden, so daß die Nachfüllöffnung 9 zunächst verschlossen ist.

Wenn der Wirkstoff des Köders nach einiger Zeit seine Wirkung verliert, kann nun einerseits die Dose 1 geöffnet werden, indem eine eventuelle Schraubverbindung geöffnet und die Rastelemente 5 aus ihrem gegenseitigen Eingriff gelöst werden. Dann ist eine Entfernung des Köders aus dem Dosenunterteil 2 und der Austausch mit einem neuen Köder leicht möglich. Soll die Köderdose durch einen gänzlich verschiedenen Köder benutzt werden, ist es empfehlenswert, die Köderaufnahmevorrichtung 11 zusammen mit dem Kennzeichnungsmittel 10 vollständig zu ersetzen. Dies geschieht in einfacher Weise dadurch, daß der Aufkleber 10, 11 abgezogen wird und durch einen neuen Aufkleber ersetzt wird.

Da der Köder auf dem Aufkleber aufgebracht war, führt die Entfernung des Aufklebers zu einer restlosen Entfernung des Köders, so daß keine zusätzlichen weitergehenden Reinigungsarbeiten nötig werden.

Andererseits kann nach Ablauf der Wirkung des Köders die Köderdose 1 jedoch auch nachgefüllt werden, indem über die Nachfüllöffnung 9 ein neuer Köder eingebracht wird. Dies erfolgt bei dem vorliegenden Ausführungsbeispiel dadurch, daß eine Spritzenkanüle durch die Nachfüllöffnung 9 eingeführt wird, und dann pastöses Ködergel auf die Köderaufnahmevorrichtung 11 gespritzt wird. Nach dem Nachfüllen kann die Nachfüllöffnung 9 wiederum durch eine Abdeckeinrichtung 13 in Form eines Aufklebers sicher verschlossen werden.

Da die Köderdose 1 bei dem gezeigten Ausführungsbeispiel vorzugsweise aus Kunststoff, z.B. Acrylbutadienstyrol(ABS) oder Metall, z.B. Aluminium, gebildet ist, und der Köder durch die erfindungsgemäße Anordnung ausreichend geschützt ist, kann die Köderdose 1 sowohl im Außenbereich als auch im Inneren eines Gebäudes verwendet werden. Durch eine entsprechende äußere Gestaltung wird diese auch nicht sofort als Köderdose erkannt, sondern wird eher als Telefon- oder Elektrodose angesehen. Bei der gezeigten Ausführungsform ist ein Teilbereich der Außenseite der Köderdose mit einer Riffelung 14 versehen, um dem Bediener ein leichteres Öffnen der Dose zu ermöglichen.

## Patentansprüche

1. Wiederbefüllbare Köderdose (1) aus einem zweiteiligen Behälter mit Oberteil (3) und Unterteil (2), die über Verbindungselemente (5), vorzugsweise Rastelemente, miteinander verbunden sind, wobei die Köderdose (1) mindestens eine Schädlingseintrittsöffnung (4) und mindestens eine Köderaufnahmevorrichtung (11) umfaßt, die die wiederholte Aufgabe und Entfernung eines Köders erlaubt, **dadurch gekennzeichnet, daß** die Köderdose (1) weiterhin mindestes eine sich von Ober- zur Unterseite der Köderdose (1) erstreckende Schutz- und Stabilisierungsvorrichtung (6, 7) umfaßt, die gleichzeitig der Köderdose (1) eine erhöhte Stabilität verleiht und den Köder vor direktem Zutritt von Schmutz und Verunreinigungen sowie dem Zugriff von außen durch die Schädlingseintrittsöffnung (4) schützt, indem die Schutz- und Stabilisierungsvorrichtung (6, 7) so angeordnet ist, daß keine gerade Verbindung zwischen Schädlingseintrittsöffnung (4) und Köderaufnahmevorrichtung (11) möglich ist.

2. Köderdose nach Anspruch 1 oder deren Oberbegriff **dadurch gekennzeichnet, daß** die Köderdose (1) weiterhin mindestens eine Nachfüllöffnung (9) umfaßt, die ohne vorheriges Öffnen der Köderdose (1) das direkte Aufbringen des Köders auf ein oder mehrere Köderaufnahmevorrichtungen (11) erlaubt.

3. Köderdose nach Anspruch 1 oder 2, **dadurch gekennzeichnet, daß** die Nachfüllöffnung (9) eine kleine runde Öffnung ist, deren Durchmesser gerade so groß ist, daß eine Kanüle oder eine Spritzenspitze oder ähnliches hindurchgesteckt werden kann.

4. Köderdose nach einem der Ansprüche 1 bis 3, **dadurch gekennzeichnet, daß** die Köderdose (1) im Bereich der Nachfüllöffnung (9) eine Abdeckaufnahmevorrichtung (12) aufweist, die eine Abdeckeinrichtung (13) zum sicheren Abdecken der Nachfüllöffnung (9) aufnimmt.

5. Köderdose nach Anspruch 4, **dadurch gekennzeichnet, daß** die Abdeckeinrichtung (13) Kennzeichnungsmittel mit Warn- und Informationshinweisen umfaßt und vorzugsweise durch einen Aufkleber gebildet wird.

6. Köderdose nach einem der vorhergehenden Ansprüche, **dadurch gekennzeichnet, daß** die Köderaufnahmevorrichtung (11) einen auswechselbaren Träger für flüssige, feste oder pastöse Köder und/oder eine Klemmvorrichtung für feste Köder umfaßt.

7. Köderdose nach einem der vorhergehenden Ansprüche, **dadurch gekennzeichnet, daß** die Köderaufnahmevorrichtung (11) Kennzeichnungsmittel (10) mit Warn- oder Informationshinweisen über den aufgebrachten Köder umfaßt und vorzugsweise die Köderaufnahmevorrichtung (11) und die Kennzeichnungsmittel (10) gemeinsam von einem abziehbaren Aufkleber gebildet werden.

8. Köderdose nach einem der vorhergehenden Ansprüche, **dadurch gekennzeichnet, daß** die Schutz- und Stabilisierungsvorrichtung (6, 7) von einer Hülse gebildet wird, die vorzugsweise doppelwandig ausgeführt ist, wobei die Doppelwandigkeit durch zwei koaxial ineinander angeordnete Hülsen (6, 7) erreicht wird, und die Schutz- und Stabilisierungsvorrichtung (6, 7) am Behälterober- und/oder -unterteil (2, 3) angeordnet ist.

9. Köderdose nach einem der vorhergehenden Ansprüche, **dadurch gekennzeichnet, daß** die Schutz- und Stabilisierungsvorrichtung (6, 7) gleichzeitig als Verbindungsvorrichtung für die Dosenteile (2, 3) und/oder als Befestigungsvorrichtung für die Anbringung der Köderdose (1) an einer Wand, einem Gegenstand oder dergleichen dient.

10. Köderdose nach den Ansprüchen 8 und 9, **dadurch gekennzeichnet, daß** die als Hülse ausgeführte Schutz- und Stabilisierungsvorrichtung (6, 7) eine Durchgangsöffnung (8) bildet, die eine Schraubverbindung zur Verbindung der Dosenteile (2, 3) und/oder zur Befestigung der Köderdose (1) an einer Wand, einem Gegenstand oder dergleichen aufnimmt.

11. Köderdose nach einem der vorhergehenden Ansprüche, **dadurch gekennzeichnet, daß** die Köderdose eine rechteckige Grundform aufweist und eine Köderaufnahmevorrichtung (11) an einer Seite des Rechteckes angeordnet ist, wobei an der gegenüberliegenden Seite die Schädlingseintrittsöffnung (4) angebracht ist und dazwischen mittig die Schutz- und Stabilisierungsvorrichtung ausgebildet ist.

12. Köderdose nach einem der vorhergehenden Ansprüche, **dadurch gekennzeichnet, daß** die Köderdose aus Kunststoff, vorzugsweise Acrylbutadienstyrol(ABS), oder aus Metall, vorzugsweise Aluminium, gebildet ist.

13. Köderdose nach einem der vorhergehenden Ansprüche, **dadurch gekennzeichnet, daß** die Köderdose (1) oder einzelne Dosenteile (2, 3) zur Kennzeichnung der Verwendung und/oder des Wirkstoffs farblich unterschiedlich ausgebildet sind.

14. Köderdose nach einem der vorhergehenden Ansprüche, **dadurch gekennzeichnet, daß** als Köder feste, flüssige und pastöse Stoffe, insbesondere Gel eingesetzt wird, die verschiedene Wirkstoffe, Gifte, Futter, Anlockmittel oder dergleichen enthalten.
